# EUROPÄISCHE PATENTANMELDUNG

(11) **EP 0 753 369 A1**
(43) Veröffentlichungstag der Anmeldung: **15.01.1997**
(21) Anmeldenummer: 96110121.9
(22) Anmeldetag: 22.06.1996
(51) Int. Cl.: B23D 55/02, B23D 53/06, B23D 55/10, B27G 19/06

(54) **Bandsäge für Bausteine, Holz, Kunststoff und dergleichen**

(30) Priorität: 13.07.1995 DE 19525517
(71) Anmelder: ZAGRO Bahn- und Baumaschinen GmbH, 74906 Bad Rappenau-Grombach (DE)
(72) Erfinder: Zappel, Werner, 74906 Bad Rappenau-Grombach (DE); Zappel, Wolfgang, 74906 Bad Rappenau-Grombach (DE)
(74) Vertreter: Fischer, Wolf-Dieter, Dipl.-Ing.

(57) **Zusammenfassung**

Die Bandsäge weist ein vertikales Tragrohrprofil 1 auf, an dem ein oberer verschiebbarer Sägebandkasten 3 und ein unterer fest angeordneter Kasten 2 angeordnet sind. In diesen geschlossenen Sägebandkästen 2, 3 sind Sägescheibenräder 12, 13 angebracht, wobei das Sägescheibenrad 12 im oberen Sägebandkasten 3 mit Hilfe eines einsteckbaren Achsbolzens 7 gelagert ist. Zwischen den Sägebandkästen 2, 3 ist eine Gewindespindel 5 zur Einstellung der Bandlänge vorgesehen. Der Sägetisch 11 ist geteilt und eine der Tischhälften 19 läßt sich herausnehmen.

## Beschreibung

Die Erfindung betrifft eine Bandsäge für Bausteine, Holz, Kunststoff und dergleichen mit einem vertikalen Tragrohrprofil sowie einem oberen und unteren Kasten zur Aufnahme von Sägescheibenrädern, über die ein endloses Sägeband läuft und einem zum Sägeband hin und her verschiebbaren Sägetisch.

Derartige Bandsägen sind bekannt und sind von ihrer Konstruktion so ausgebildet, daß sie ein hohes Gewicht aufweisen. Die massive Stahlbauweise ist notwendig, weil das obere Sägescheibenrad zum Ausrichten des Sägebandlaufs schwenkbar sein muß. Damit die Sägebandkästen zum Auflegen des Sägebandes zugänglich sind, sind die Kästen mit Türen versehen, was eine mögliche Unfallgefahr herbeiführt. Weiterhin ist die Konstruktion derart, daß die Sägeband-Spannung nur begrenzt eingestellt werden kann und zwar mit Hilfe einer einfachen Spannschraube. Die Tische sind mit einem Schlitz versehen und werden für den Transport verschwenkt, was jedoch kompliziert und aufwendig ist.

Der Erfindung liegt die Aufgabe zugrunde, eine derartige Bandsäge so auszubilden, daß diese zu Transportzwecken in Leichtbauweise ausgebildet und leicht zerlegbar ist.

Diese Aufgabe wird nach der Erfindung dadurch gelöst, daß die Sägescheibenräder in geschlossenen Sägebandkästen angeordnet sind und einer der Sägebandkästen höhenverschiebbar am Tragrohrprofil gehaltert ist, daß das Sägescheibenrad im höhenverschiebbaren Sägebandkasten mit Hilfe eines einsteckbaren Achsbolzens gelagert ist, daß zwischen den Sägebandkästen eine Gewindespindel zur Einstellung der Bandlänge vorgesehen ist und daß der Sägetisch geteilt und eine der Tischhälften herausnehmbar ist.

Eine vorteilhafte Ausführungsform besteht darin, daß die Gewindespindel am oberen Sägebandkasten an einem Exzenter gehaltert und am unteren Sägebandkasten an einer Spannfeder abgestützt ist.

Weiterhin ist es vorteilhaft, daß am unteren Sägebandkasten horizontale Führungsschienen angebracht sind, zwischen denen eine horizontale Führung am Sägetisch angeordnet ist.

Es ist vorteilhaft, daß die herausnehmbare Tischhälfte an der hochklappbaren Anschlagleiste mit Hilfe eines in eine Bohrung an der Tischhälfte eingreifenden Arretierstiftes gehaltert ist.

Weiterhin wird vorgeschlagen, daß eine zwischen den Sägebandkästen angeordnete Sägebandschutzkappe nach unten bzw. seitlich wegklappbar ist.

Es ist außerdem vorteilhaft, daß die Sägebandkästen zwei U-Profile aufweisen, die mittels Verbindungsblechen zu einem Kastenprofil verbunden sind.

Weiterhin geht man so vor, daß das eine U-Profil zum Einhängen in eine nutförmige Führung des Tragrohres ein hakenförmiges Verbindungsprofil aufweist.

Schließlich wird vorgeschlagen, daß in das andere U-Profil des oberen Sägebandkastens eine Halterung für eine Sägebandführung eingesetzt ist, mit Führungsbacken und einer Anlaufrolle für das Sägeband.

Durch die besondere Ausgestaltung der Bandsäge läßt sich diese in einer Aluminium-Leichtbaukonstruktion verwirklichen, wobei zum leichteren Transport der Tisch ohne Werkzeug demontierbar ist. Außerdem läßt sich die Bandspannung auch bei unterschiedlichen Bandlängen einstellen. Durch den teilbaren Tisch sind keine großen Klappen für den Sägebandwechsel vorhanden.

Die Erfindung wird in der nachfolgenden Beschreibung anhand eines in den Zeichnungen dargestellten Ausführungsbeispiels näher erläutert.

Es zeigen,

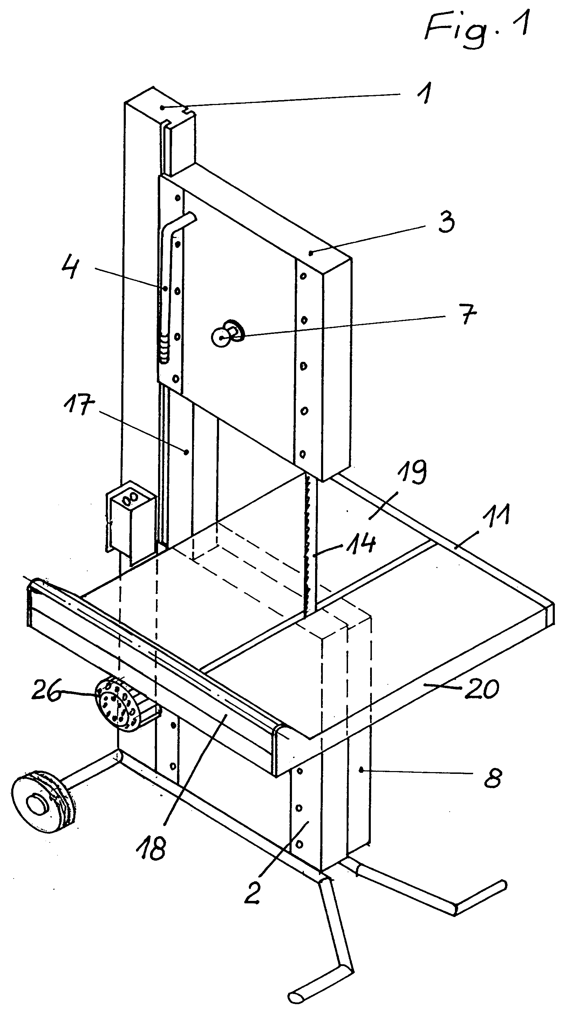

- Fig. 1: eine schaubildliche Ansicht einer erfindungsgemäßen Ausführungsform der Bandsäge,
- Fig. 2: eine Vordersansicht der Bandsäge,
- Fig. 3: eine Seitenansicht von Fig. 2,
- Fig. 4: einen Schnitt durch den oberen Sägebandkasten,
- Fig. 5: die Bandsäge in schaubildlicher Ansicht vor dem Einführen eines Sägebandes,
- Fig. 6: eine entsprechende Darstellung der Bandsäge gemäß einem weiteren Schritt für das Einführen des Sägebandes,

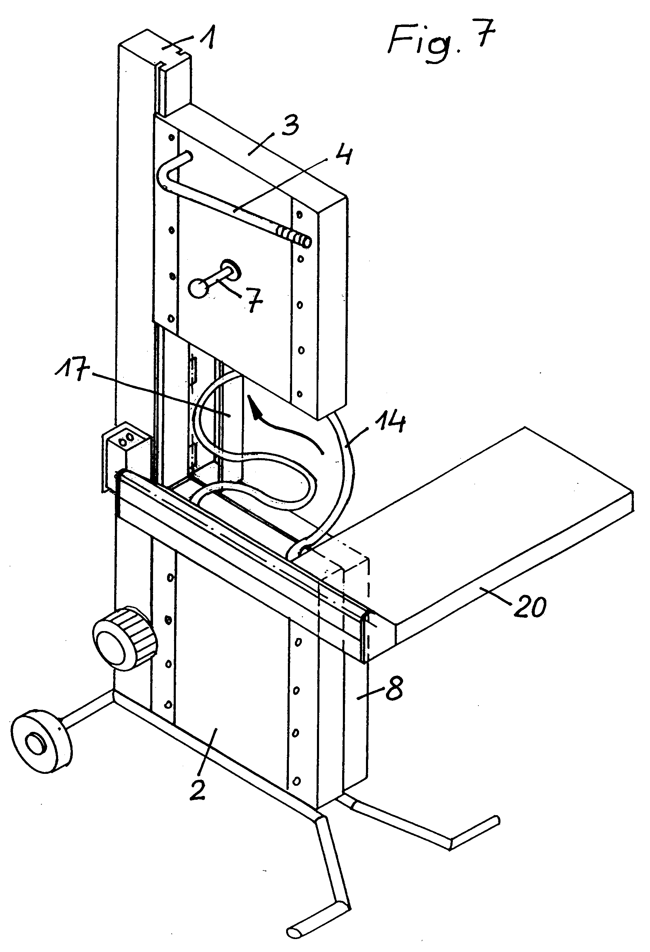

- Fig. 7: eine entsprechende Darstellung der Bandsäge nach dem weiteren Einführen des Sägebandes,
- Fig. 8: der Sägetisch im Aufriß,
- Fig. 9: einen Grundriß von Fig. 8,
- Fig. 10: eine Ansicht des abgenommenen Sägetisches vor dem Teilen,
- Fig. 11: eine schaubildliche Ansicht des Sägetisches nach dem Teilen der beiden Tischhälften,
- Fig. 12: eine schaubidliche Ansicht der Sägeband-Schutzklappe,
- Fig. 13: eine Seitenansicht der Sägebandführung und
- Fig. 14: einen Schnitt durch den oberen Sägebandkasten im Bereich der Sägebandführung.

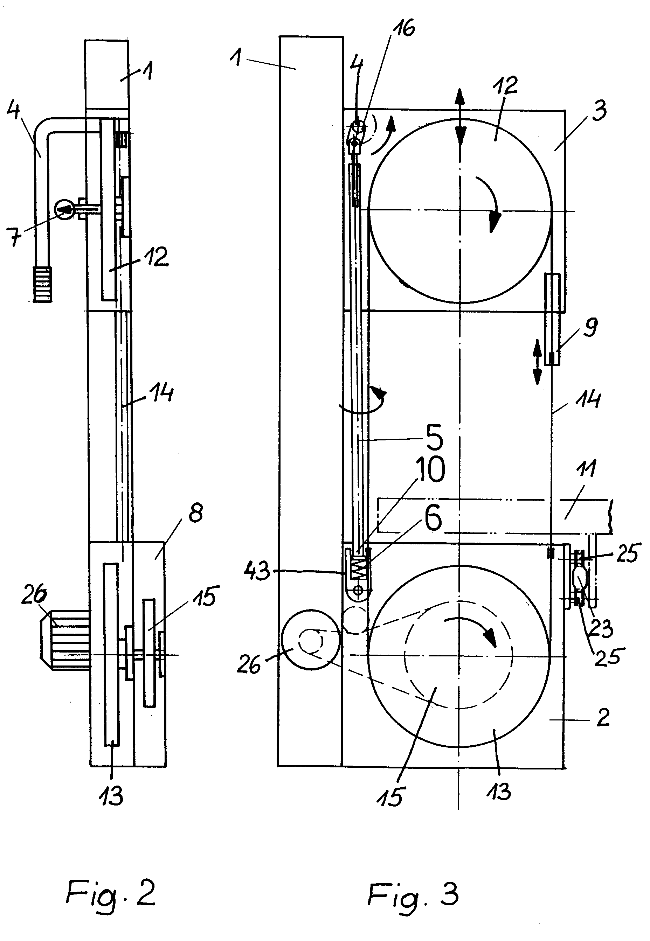

Die in den Zeichnungen dargestellte Bandsäge dient zum Bearbeiten von Bausteinen, insbesondere aus Porenbeton oder Hohllochziegel sowie entsprechenden Gegenständen aus Holz oder Kunststoff. Die Bandsäge besteht aus einem vertikalen Tragrohr 1, an dem ein oberer Sägebandkasten 3 und ein unterer Sägebandkasten 2 als Kastenprofil ausgebildet, gehaltert sind. Der obere Sägebandkasten 3 ist an dem Tragrohr 1 verschiebbar gehaltert. In beiden Kästen 2, 3 sind Sägescheibenräder 12 bzw. 13 angeordnet, über die ein Sägeband 14 läuft. Der Antrieb des Sägebandes 14 erfolgt über einen Motor 26, der über eine Riemenscheibe 15 das untere Sägescheibenrad 13 antreibt. Die Riemenscheibe 15 ist in einem Seitenkasten 8 zum Sägebandkasten 2 angebracht. Der Sägebandkasten 2 ist am Tragrohrprofil 1 z.B. durch Nieten fest angebracht. Zum Einstellen der Sägebandspannung dient eine Gewindespindel 5, die am unteren Kasten 2 an einer Spannfeder 6 abgestützt ist und die am oberen Kasten 3 über einen Exzenter 16 befestigt ist, wobei durch Verschwenken des Exzenters 16 mit Hilfe eines Spannhebels 4 über den unteren Totpunkt (Fig. 3) die eingestellte Sägebandspannung erreicht wird. Die Spannfeder 6 ist in einer Gabel 43 angeordnet, wobei die richtige Sägebandspannung durch die Endlage der Spindel 5 als optische Anzeige 10 sichtbar ist.

An dem unteren Kasten 2 ist ein Sägetisch 11 verschiebbar angeordnet, wobei seitlich an den Kästen 2, 8 im Abstand zueinander waagerechte Führungsschienen 25 vorgesehen sind, während an einem Fuß des Sägetisches 11 eine entsprechende Führung 23 vorgesehen ist, die zwischen den beiden Führungsschienen 25 läuft.

Das obere Sägescheibenrad 12 ist im Kasten 3 mit Hilfe eines steckbaren Achsbolzens 7 gehaltert, der zum Auswechseln des Sägebandes 14 herausgezogen wird. Am oberen Kasten 3 ist vorne eine Sägebandführung 9 vorgesehen. Außerdem befindet sich zwischen den beiden Kästen 2, 3 zum Tragrohrprofil 1 hin eine Sägebandschutzklappe 17. Für die Montage bzw. Demontage und den Transport der Bandsäge ist der Sägetisch geteilt und weist eine feste Tischhälfte 20 sowie eine herausnehmbare Tischhälfte 19 auf. Zum Lösen bzw. Befestigen der herausnehmbaren Tischhälfte 19 dient eine am Tisch 11 angebrachte Anschlagleiste 18, deren Funktion noch später näher beschrieben wird.

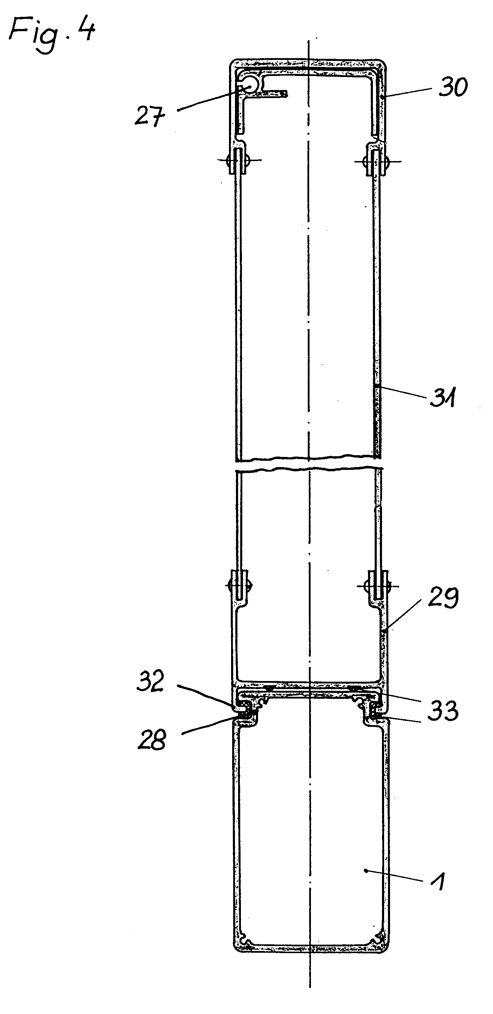

In Fig. 4 sind die leichten und stabilen Aluminiumrahmen der Konstruktion erkennbar, wobei das Tragrohrprofil 1 zum Kasten 2 bzw. 3 eine nutförmige Führung 28 aufweist, in die die Kastenprofile 2, 3 über Verbindungsprofile 32 eingreifen. Diese Verbindungsprofile sind Teil eines U-Profils 29 der Sägebandkästen 2, 3, denen ein weiteres U-Profil 30 gegenüberliegt und die beiden Profile 29, 30 mit Hilfe von Verbindungsblechen 31 zu einem Kasten verbunden sind. Im vorderen Bereich des oberen Kastens 3 ist eine Halterung 27 für eine Sägebandführung vorgesehen.

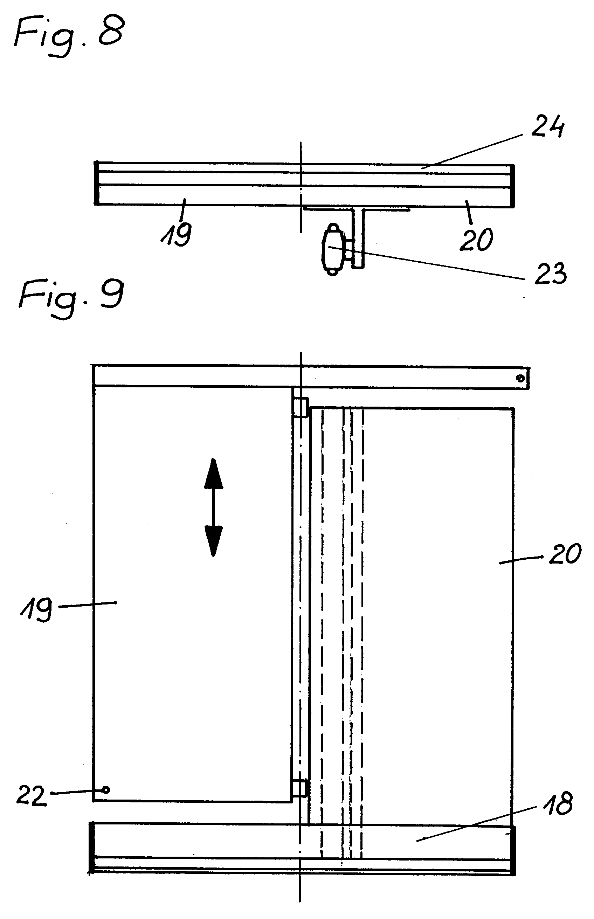

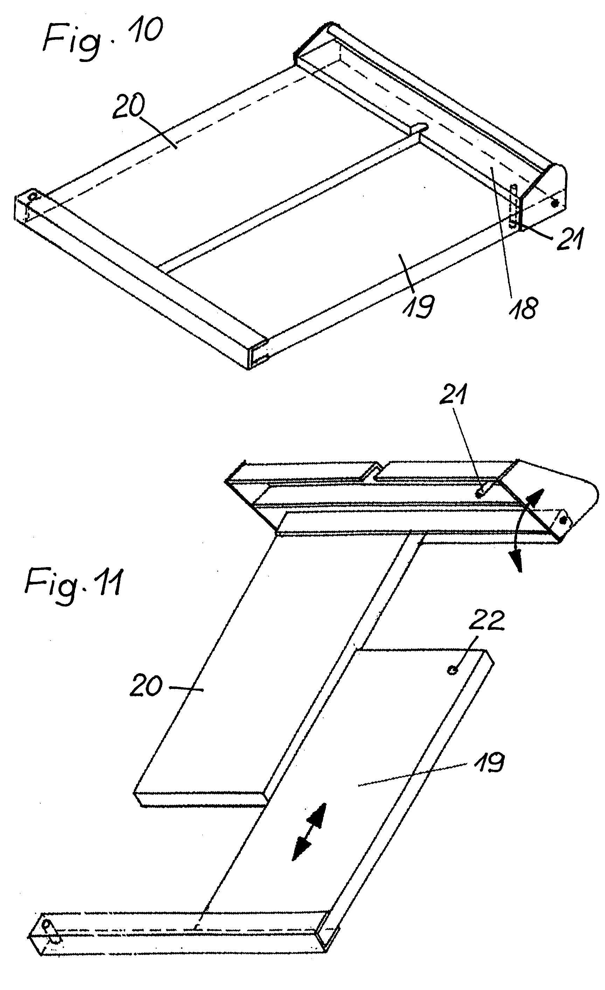

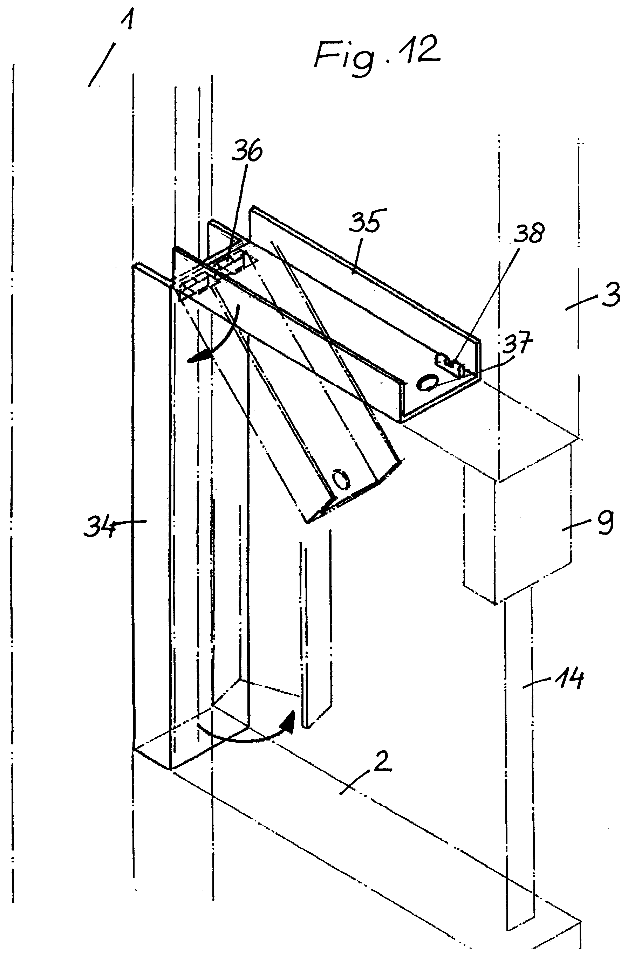

Die Teilbarkeit des Sägetisches 11 ergibt sich insbesondere aus den Figuren 8 bis 11. In Figur 11 ist sichtbar, daß die Anschlagleiste 18 nach oben geschwenkt werden kann, wodurch der daran angeordnete Arretierstift 21 aus einer entsprechenden Bohrung außer Eingriff gelangt, so daß die Tischhälfte 19 herausgezogen werden kann. Zur Vereinfachung der Bedienung ist an der Anschlagleiste 18 eine Griffstange 24 befestigt.

Die in Fig. 12 dargestellte Sägeband-Schutzkappe 17 besteht im wesentlichen aus einem U-Profil, das einen mit dem oberen Kasten 3 verbindbaren waagerechten Teil 35 und einen vertikalen Teil 34 aufweist. Die beiden Teile sind an einem Scharnier 36 miteinander verbunden. Außerdem befindet sich an dem Teil 35 eine Verriegelung 38 sowie eine Grifföffnung 37. Zum Abnehmen dieser Schutzkappe 17 wird zunächst das Teil 35 nach unten geklappt und dann das Gesamtteil über das vertikale Scharnier des Teiles 34 zur Seite hin.

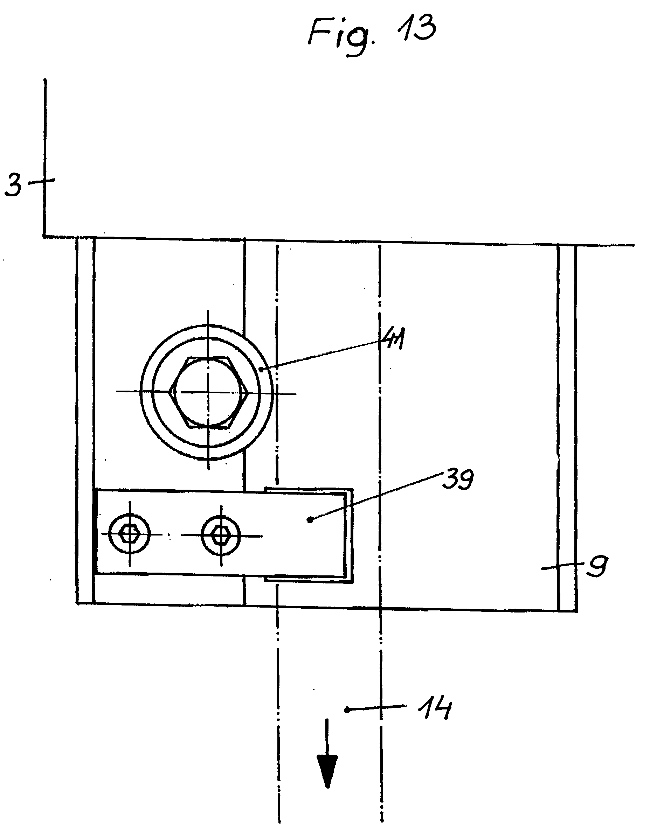

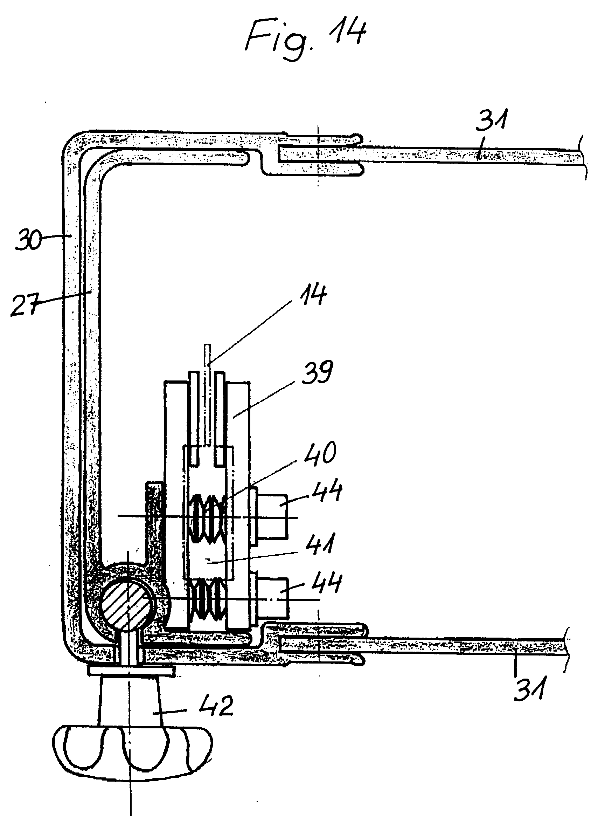

Die in den Figuren 13 und 14 gezeigte Sägebandführung 9 ist an der Halterung 27 befestigt und besitzt zwei Führungsbacken 39, die mit Hilfe von Tellerfedern 40 auseinandergedrückt werden. Durch Schraubspindeln 44 sind die beiden Backen 39 gegeneinandergedrückt. Außerdem ist eine Anlaufrolle 41 angeordnet, an der sich das Sägeband 14 abstützt. Zur Höhenverstellung dient ein Feststellrad 42, womit die Halterung 27 an dem U-Profil 30 festgeklemmt wird.

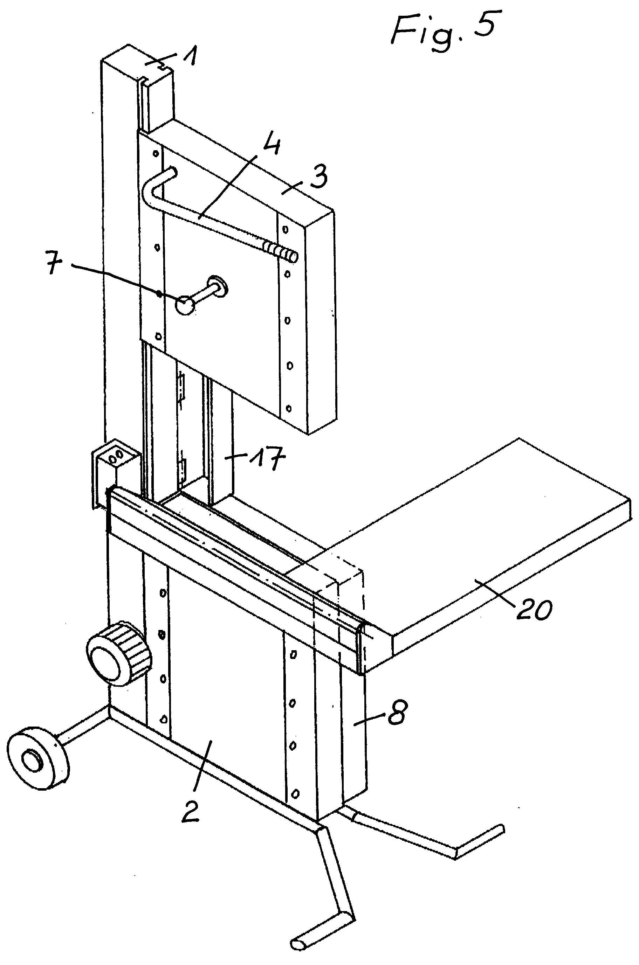

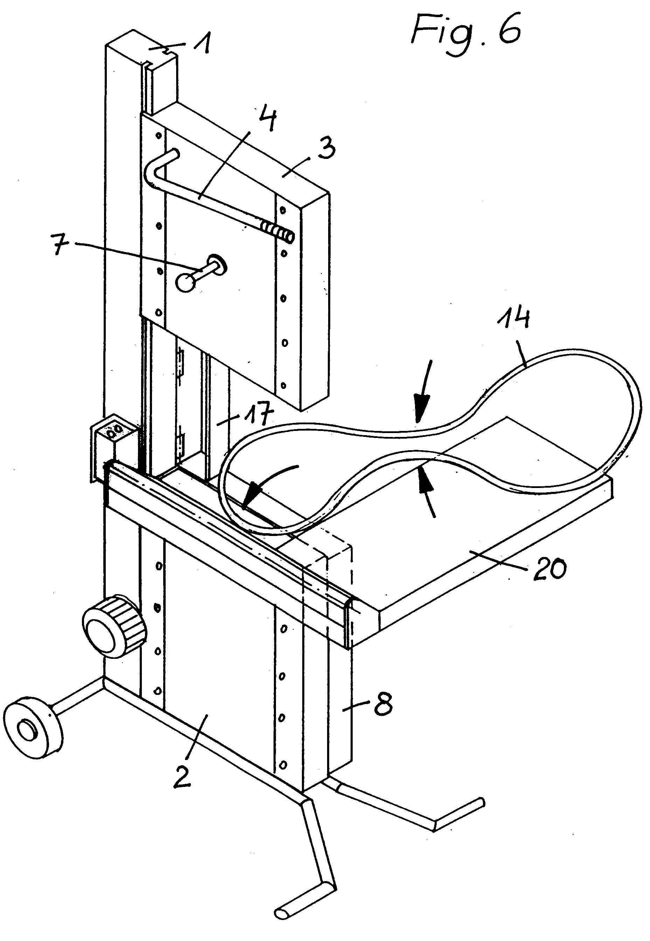

Zum Aufspannen eines Sägebandes 14 wird zunächst der Tisch 11 ganz nach vorne geschoben und verriegelt, wobei durch entsprechende Schalter die Maschine automatisch abgeschaltet und der Einschaltknopf blockiert wird. Dann wird der Spannhebel 4 nach rechts entgegen dem Uhrzeigersinn bewegt, so daß der obere Kasten 3 über den Exzenter 16 nach unten bewegt wird. Nach dem Auseinanderziehen des Sägetisches 11 und Öffnen der Schutzkappe 17 kann das Sägeband 14 durch die nun an den Stirnseiten offenen Kastenprofile 2, 3 eingefädelt werden (Figuren 5 und 6). Um das Sägeband 14 über das obere Scheibenrad 12 legen zu können, muß zuvor der zur Stabilisierung des oberen Rades dienende Achsbolzen 7 herausgezogen werden. Vor dem Auflegen und Ausrichten des Sägebandes 14 wird der Achsbolzen 7 wieder eingeschoben, da sich ansonsten der Spannhebel 4 nicht bewegen läßt. Danach wird das Sägeband 14 in die Bandführung 9 eingefädelt und über die Scheibenräder 12 bzw. 13 gelegt. Der Klemmhebel 4 wird dann mit dem Uhrzeigersinn bewegt, bis der Exzenter 16 über den unteren Totpunkt springt. Hierdurch ist der Klemmhebel 4 vor unbeabsichtigtem Lösen der Spannung gesichert. Bei richtiger Sägebandspannung ist die optische Anzeige 10 nicht mehr sichtbar. Nach dem Schließen der Schutzkappe 17 und Zusammenstecken des Tisches 11 sowie Entriegeln und nach hinten herausziehen, läßt sich die Maschine einschalten.

## Patentansprüche

1. Bandsäge für Bausteine, Holz, Kunststoff und dergleichen mit einem vertikalen Tragrohrprofil sowie einem oberen und unteren Kasten zur Aufnahme von Sägescheibenrädern, über die ein endloses Sägeband läuft und einem zum Sägeband hin und her verschiebbaren Sägetisch, dadurch gekennzeichnet, daß die Sägescheibenräder (12, 13) in geschlossenen Sägebandkästen (2,3) angeordnet sind und einer der Sägebandkästen (3) höhenverschiebbar am Tragrohrprofil (1) gehaltert ist, daß das Sägescheibenrad (12) im höhenverschiebbaren Sägebandkasten (3) mit Hilfe eines einsteckbaren Achssbolzens (7) gelagert ist, daß zwischen den Sägebandkästen (2, 3) eine Gewindespindel (5) zur Einstellung der Bandlänge vorgesehen ist und daß der Sägetisch (11) geteilt und eine der Tischhälften (19) herausnehmbar ist.

2. Bandsäge nach Anspruch 1, dadurch gekennzeichnet, daß die Gewindespindel (5) am oberen Sägebandkasten (3) an einem Exzenter (16) gehaltert und am unteren Sägebandkasten (2) an einer Spannfeder (6) abgestützt ist.

3. Bandsäge nach einem der Ansprüche 1 oder 2, dadurch gekennzeichnet, daß am unteren Sägebandkasten (2) horizontale Führungsschienen (25) angebracht sind, zwischen denen eine horizontale Führung (23) am Sägetisch (11) angeordnet ist.

4. Bandsäge nach einem der Ansprüche 1 bis 3, dadurch gekennzeichnet, daß die herausnehmbare Tischhälfte (19) an der hochklappbaren Anschlagleiste (18) mit Hilfe eines in eine Bohrung (22) an der Tischhälfte (19) eingreifenden Arretierstiftes (21) gehaltert ist.

5. Bandsäge nach einem der Ansprüche 1 bis 4, dadurch gekennzeichnet, daß eine zwischen den Sägebandkästen (2, 3) angeordnete Sägebandschutzkappe (17) nach unten bzw. seitlich wegklappbar ist.

6. Bandsäge nach einem der Ansprüche 1 bis 5, dadurch gekennzeichnet, daß die Sägebandkästen (2, 3) zwei U-Profile (29, 30) aufweisen, die mittels Verbindungsblechen (31) zu einem Kastenprofil verbunden sind.

7. Bandsäge nach Anspruch 6, dadurch gekennzeichnet, daß das eine U-Profil (29) zum Einhängen in eine nutförmige Führung (28) des Tragrohres (1) ein hakenförmiges Verbindungsprofil aufweist.

8. Bandsäge nach Anspruch 7, dadurch gekennzeichnet, daß in das andere U-Profil (30) des oberen Sägebandkastens (3) eine Halterung (27) für eine Sägebandführung eingesetzt ist, mit Führungsbacken (39) und einer Anlaufrolle (41) für das Sägeband.
